# EUROPÄISCHE PATENTSCHRIFT

(11) **EP 3 490 715 B1**
(45) Veröffentlichungstag und Bekanntmachung des Hinweises auf die Patenterteilung: **16.08.2023**
(21) Anmeldenummer: 17740115.5
(22) Anmeldetag: 29.06.2017
(51) Int. Cl.: B02C 4/20, B02C 4/34, A23F 3/12, B02C 4/02, B02C 4/08

(54) **EINRICHTUNG ZUR ZERKLEINERUNG VON TROCKENEN PFLANZEN**
DEVICE FOR COMMINUTION OF DRY PLANTS
DISPOSITIF POUR BROYAGE DE PLANTES SÈCHES

(30) Priorität: 26.07.2016 CH 9742016
(43) Veröffentlichungstag der Anmeldung: 05.06.2019
(73) Patentinhaber: Unicaps GmbH, 15236 Frankfurt an der Oder (DE)
(72) Erfinder: PFAMMATTER, Lukas, 6315 Oberägeri (CH); ASCHWANDEN, Marco, 6343 Rotkreuz (CH)
(74) Vertreter: Frommhold, Joachim
(86) Internationale Anmeldenummer: PCT/IB2017/053914
(87) Internationale Veröffentlichungsnummer: WO 2018/020339

(56) Entgegenhaltungen:
- EP-A1- 2 660 161
- CN-U- 202 135 657
- GB-A- 281 922

## Beschreibung

Die Erfindung betrifft eine Einrichtung zur Zerkleinerung von trockenen Pflanzen, insbesondere zur Zerkleinerung von getrockneten Teeblättern, Kräutern und anderer trockenbarer Pflanzen und deren Bestandteile, nach dem Oberbegriff des Patentanspruchs 1.

Gattungsgemässe Einrichtungen zur Zerkleinerung oder Zerschneiden von Teeblättern sind aus dem Stand der Technik vorbekannt. Hierbei werden, in einem Gehäuse drehbar angeordnete Walzen eingesetzt, die mit Nocken, Schneidkanten o. a. besetzt sind. Als Gegenstück kann eine weitere solche Walze oder ein kammartiges Element zugeordnet sein, wobei die Teeblätter in den Hohlräumen resp. Spalt zwischen Walze und Gegenstück zerrieben oder zerschnitten werden. Die Teeblätter werden aus einem Vorratsbehälter, der oberhalb der Walze angeordnet ist, zugeführt. Die zerkleinerten Teeblätter werden unterhalb der Walze, zum Beispiel in einer Sammel- und Austragseinrichtung erfasst und abgeführt. Häufig sind mehrere Spalte in vertikaler Richtung angeordnet, wobei die Zerkleinerung von grob zu fein erfolgt. Die Walzen und Kämme weisen somit unterschiedliche Geometrien auf und/oder werden mit unterschiedlichen Parametern betrieben werden, wie dies z. B. in GB 2158338 A, GB 132765, GB 282147 oder EP 2660161 A1offenbart ist. Infolge der intensiven Zerkleinerung werden auch Zellstrukturen der Teeblätter zerstört und Inhaltsstoffe resp. Aromen gehen verloren. Zudem können sich geschmacksmindernde Stäube o. a. anlagern. Bekannt ist auch eine Zerkleinerung von Teeblättern im Walzenspalt eines Walzenpaares mit schneidenden Walzen, u. a. gemäss GB 820726 A, GB 559937 A, GB 281922, SU 454020 A1 oder SU 400305 A1.

Eine weitere derartige Einrichtung ist in der EP 2660161 A1 offenbart. Hierbei sind drei Walzen in einem Gehäuse über- bzw. untereinander angeordnet. Oberhalb der obersten Walze ist ein Speisetrichter für die Zufuhr von Teeblättern angeordnet und unterhalb der untersten Walze eine trichterförmige Austragseinrichtung für die zerkleinerten Teeblätter. Mittels v-förmig schräg angestellter Leitbleche, die an der, der Walze zugewandten Stirnfläche in einen Kamm übergehen, werden die Teeblätter zu den Walzen geleitet, wo sie zwischen Schneidnocken der Walze und Schneidelementen des Kamms zerkleinert werden.

Die zerkleinerten Teeblätter fallen in Richtung der darunterliegenden Walze resp. nach der dritten Walze in die Austragseinrichtung, wobei die Zerkleinerung wiederum von grob zu fein erfolgt. Die Zerkleinerung erfolgt in einer Schutzgasatmosphäre, indem Stickstoff in das Gehäuse eingeblasen wird.

Wie beim übrigen Stand der Technik erfolgt eine Verstellung resp. Einstellung der Zerkleinerungsparameter horizontal von der Seite und insbesondere von vorn durch am Gehäuse angeordnete Verstellmechanismen.

Der Erfindung liegt nun die Aufgabe zugrunde, eine Einrichtung zur Zerkleinerung von trockenen Pflanzen, insbesondere zur Zerkleinerung von getrockneten Teeblättern, Kräutern und anderer trockenbarer Pflanzen und deren Bestandteile zu schaffen, die eine schonende Zerkleinerung des genannten Guts ermöglicht sowie eine einfache Einstellung der Zerkleinerungsparameter ermöglicht.

Die Aufgabe ist mit den Merkmalen des Patentanspruchs 1 gelöst.

Die Einrichtung umfasst ein Gehäuse mit einem obenliegenden Einlass für das zu zerkleinernde Gut und einem unten liegenden Auslass für das zerkleinerte Gut.

Im Gehäuse sind, dem Einlass nachgeordnet, mindestens zwei identische drehbare und angetriebene Walzen in mindestens zwei Ebenen (Zerkleinerungskammern) als Einzelwalzenpassagen übereinander angeordnet, mindestens je zwei Walzen pro Ebene.

identisch bedeutet hierbei, dass die Abmessungen und Konfiguration der Walzen, wie bevorzugt auch die Zerkleinerungsparameter jeder Walze gleich sind.

Jede Walze korrespondiert mit mindestens einem einstellbaren Kamm.

Bevorzugt sind links bzw. rechts von jeder Walze zur Seitenwand des Gehäuses hin schräg auf die Walzen gerichtete Leitbleche angeordnet, die auf Höhe der Walzen mit formentsprechenden, strukturierten Kämmen versehen sind.

Das Zerkleinern des Guts erfolgt durch Einzug des über den Einlass zugeführten Guts zwischen Walze und Kamm, wobei Nocken und Rillen bzw. Nuten der sich drehenden Walzen Mitnahme und Austrag des zerkleinerten Guts bewirken, soweit dies nicht bereits schwerkraftbedingt erfolgt.

Die erfindungsgemässe Einrichtung ermöglicht es, insbesondere getrocknete Teeblätter oder andere getrocknete Pflanzen bzw. Pflanzenbestandteile schonend so zu zerkleinern, dass die wünschenswerten Eigenschaften erhalten bleiben. D. h. Zellwände bleiben erhalten oder werden nur minimal beschädigt und bei der Zubereitung von Tee wird eine optimale Geschmacksentfaltung erreicht. Dies ermöglicht es auch bei Tee o. a., der in Kapseln portionierbar ist, trotz kurzer Kontaktzeit mit heissem Wasser genügend viele Aromen aus dem Teematerial zu extrahieren.

Bevorzugte Ausführungsformen sind in den abhängigen Ansprüchen offenbart.

Eine Ausführung der Einrichtung mit nur einer Walze je Ebene ist erfindungsgemäss. In bevorzugter Ausführung sind im Gehäuse vier Walzen in zwei Ebenen übereinander angeordnet, je zwei einzelne Walzen pro Ebene als Einzelwalzenpassagen. In der oberen Ebene weisen die einzelnen Walzen einen grösseren Abstand zueinander auf als in der unteren Ebene, wobei die Speisung der unteren Walze(n) mittels Gravitation erfolgt. Die Walzen sollen nicht im Lot übereinander angeordnet sein. Die Versetzung der Achsabstände zwischen der Walze der oberen Ebene zur Walze der unteren Ebene soll mindestens 10mm betragen.

Diese Walzenanordnung ermöglicht eine Einstellung des Abstandes zwischen Walze und Kamm resp. eine Einstellung des Kamms in vertikaler Richtung und unter Handhabung von Verstellmechanismen von oben, wobei die Verstellmechanismen in oder oberhalb der oberen Ebene angeordnet sind, unter Einbezug einer Verstellbarkeit der Kämme der unteren Ebene.

Dies ermöglicht zugleich eine kompakte, modulare Anordnung mehrerer Einrichtungen nebeneinander in Reihe und/oder hintereinander als Paketanordnung, für eine Erhöhung der Zerkleinerungskapazität.

Die Walzen in jeder Ebene können in einer anderen Ausführungsform auch paarweise angeordnet sein, wobei jedes Walzenpaar so angeordnet ist, dass sich die Walzen gegeneinander drehen, resp. ineinander eingreifen, wobei die Drehzahl, analog zur Anordnung einzelner Walzen, variierbar ist.

Die Nocken weisen bevorzugt eine Höhe P (bzw. die Nuten eine entsprechende Tiefe) von mindestens 3,5mm auf und eine Breite W von bis zu 6mm. Der Abstand L zwischen zwei Nocken (resp. die Weite der Nut) in axialer und radialer Richtung kleiner oder maximal gleich der Breite W der Nocken.

Auf beiden Ebenen ist zwischen den Walzen ein Teil- und Zuführblech für das zu zerkleinernde Gut angeordnet, welches zwischen den Walzen dreieckig mit der Spitze nach oben geformt ist.

In weiterhin bevorzugter Ausführung ist die Einrichtung mit Mitteln zur Aspiration versehen, insbesondere für einen Dauerbetrieb der Einrichtung und einer damit notwendig werdenden Staubabsaugung.

Die erfindungsgemässe Einrichtung kann weiterhin stationär oder verfahrbar ausgebildet sein.

Der Vorgang der Zerkleinerung erfolgt bevorzugt in einer oxidativen Normalatmosphäre im Gehäuse der Einrichtung.

Das zerkleinerte Gut kann zudem nachfolgend unter einer Stickstoffatmosphäre in Kapseln abgefüllt werden, analog zu Kaffeekapseln.

Die Erfindung wird nachfolgend in Ausführungsbeispielen anhand einer Zeichnung näher beschrieben. In der Zeichnung zeigen die
Fig. 1: eine erfindungsgemässe Einrichtung in vereinfachter Darstellung,
Fig. 2: die Einrichtung nach Fig. 1 in Seitenansicht,
Fig. 3: die erfindungsgemässe Einrichtung in anderer Bauform,
Fig. 4: eine Walze (Fig. 4a) und Details der Walze (Fig. 4b),
Fig. 5: eine paarweise Anordnung von Walzen,
Fig. 6: eine Aspiration der erfindungsgemässen Einrichtung und
Fig. 7: eine erfindungsgemässe Verstelleinrichtung für einen Kamm.

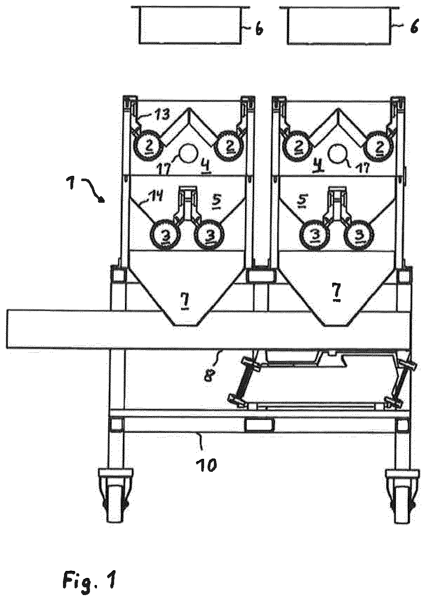

Eine erfindungsgemässe Einrichtung (Fig. 1) zur Zerkleinerung von trockenen Pflanzen, zum Beispiel von getrockneten Teeblättern umfasst ein Gehäuse 1, in dem vier identische Walzen 2, 3 aus Stahl in zwei Ebenen 4, 5 übereinander angeordnet sind, je zwei Walzen 2, 3 pro Ebene 4, 5. In der oberen Ebene 4 weisen die Walzen 2 einen grösseren Abstand zueinander auf als in der unteren Ebene 5.

Oberhalb der oberen Ebene 4 ist ein trichterförmiger Einlass 6 für unzerkleinerte Teeblätter vorgesehen, aus dem sie im freien Fall auf die oberen Walzen 2 gelangen, wobei die Speisung der unteren Walze(n) 3 im Wesentlichen mittels Gravitation erfolgt. Unterhalb der unteren Walzen 3 ist im Gehäuse 1 ein Auslass 7 für zerkleinerte Teeblätter vorgesehen. Von diesem Auslass 7 gelangen die zerkleinerten Teeblätter im freien Fall auf eine Vorrichtung zum Abtransport derselben, zum Beispiel ein Förderband 8.

Einlass 6 und Auslass 7 können sich über die gesamte Länge der Walzen 2, 3 erstrecken.

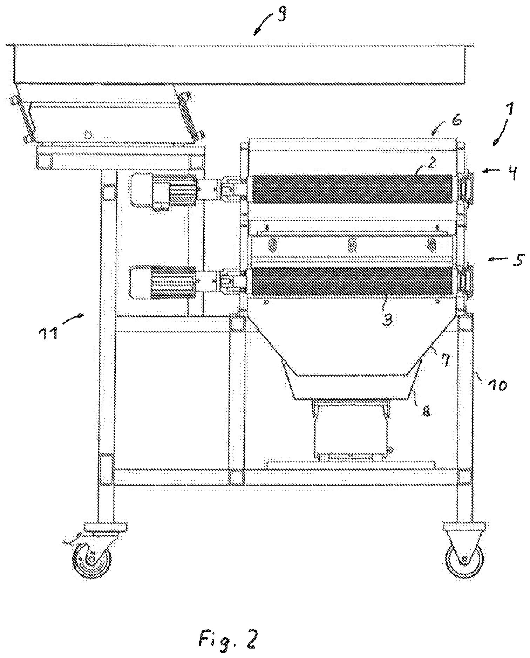

Dem Einlass 6 ist eine Speiseeinrichtung 9 für unzerkleinerte Teeblätter zugeordnet (Fig. 2), von der aus der Einlass 6 beladen wird. Die Speiseeinrichtung 9 ist steuer- und regelbar hinsichtlich der pro Zeiteinheit zuzuführenden Menge an Teeblättern.

Die Walzen 2, 3 weisen eine Länge von ca. 530mm auf, könnten aber auch bis ca. 800mm lang sein. Sie sind auf der Umfangsfläche 12 durchgehend mit Nocken 24 und Rillen oder Nuten 25 versehen, wie sie aus dem Stand der Technik hinreichend bekannt sind. Zwei benachbarte Nocken 24 sind jeweils in axialer und radialer Richtung durch eine Nut 25 voneinander beabstandet. In axialer Richtung der Walze 2, 3 weisen die Nocken 24 einen gleichen Abstand zueinander auf, analog in radialer Richtung auf dem Umfang. Die axiale und die radiale Grösse des Abstands zwischen zwei Nocken 24 kann gleich oder verschieden gewählt sein.

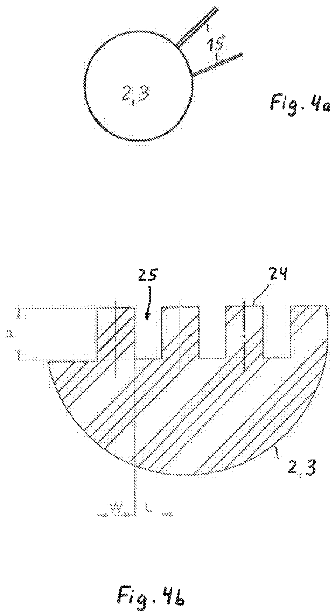

Die Nocken 24 weisen eine Höhe P von mindestens 3,5mm auf und eine Breite W von bis zu 6mm (vgl. Fig. 4b). Ein kleinerer Wert für die Höhe P und grössere Werte für die Breite W beeinträchtigen den Durchsatz und den Zerkleinerungsgrad.

Der Abstand L zwischen zwei Nocken, resp. die Weite der Nut 25, ist in axialer und radialer Richtung kleiner als die Breite W der Nocken 24 gewählt.

Allgemein soll W > L und W < 2L sein.

Die Walzen 2, 3 können mit variierbarer Drehzahl betrieben werden, wobei die Drehzahl der einzelnen Walzen 2, 3 untereinander nicht verschieden sein soll.

Die Walzen 2, 3 können in beiden Ebenen 4, 5 identisch oder in anderer, nicht zur Erfindung gehöriger Ausführung je Ebene 4, 5 unterschiedlich ausgebildet sein. Bei unterschiedlicher Ausbildung sind die Walzen 2 der oberen Ebene 4 so gestaltet und betreibbar, dass sie im Vergleich zur unteren Ebene 5 eine gröbere Zerkleinerung der Teeblätter bewirken. In der unteren Ebene 5 erfolgt dann nachfolgend eine feinere Zerkleinerung der vorzerkleinerten Teeblätter.

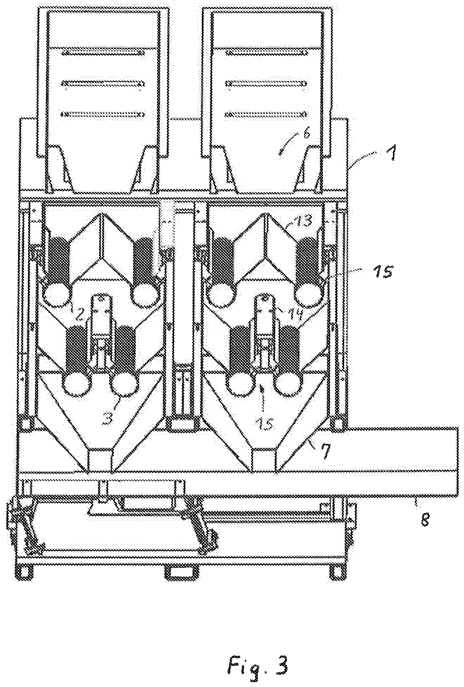

Den Walzen 2, 3 sind weiterhin schräg auf sie gerichtete Leitbleche 13, 14 zugeordnet, die den Strom der eingespeisten Teeblätter über die Walzenlänge vergleichmässigen und die Teeblätter den Walzen 2, 3 zuführen (Fig. 1, 3).

Auf Höhe der Walzen 2, 3 sind die Leitbleche 13, 14 kammartig ausgebildet und weisen ebenfalls Nocken und Nuten auf, die mit den Nocken 24 und Nuten 25 der Walzen 2, 3 kämmen/interagieren. Die Kämme 15 können auch als separate Elemente ausgebildet sein, die auf den Leitblechen 13, 14 angeordnet sind.

Zur Erhöhung der Zerkleinerungskapazität je Walze 2, 3 können auch zwei Kämme 15 jeder Walze 2, 3 zugeordnet sein, vereinfacht dargestellt in Fig. 4a. Die Kämme 15 sind etwa parallel oder leicht winklig zueinander angeordnet. Eine solche Ausführung verdoppelt die Kapazität je Walze 2, 3 bei vergleichsweise geringem Mehraufwand für den zweiten Kamm 15.

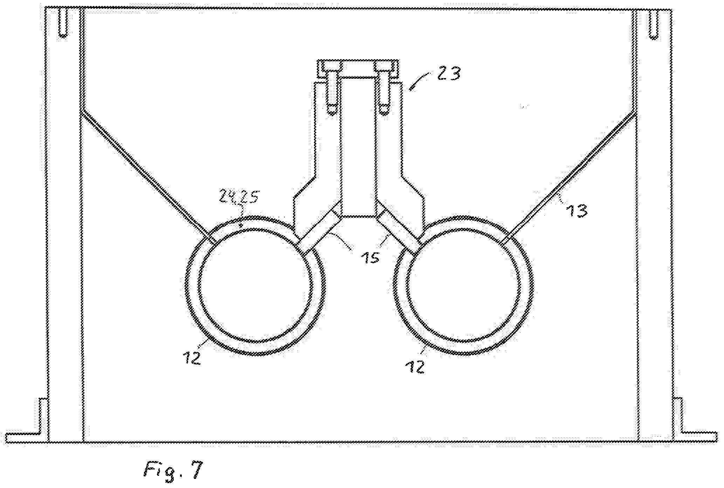

Auf beiden Ebenen ist zwischen den Walzen ein Leitblech 14 (Teil- und Zuführblech) für das zu zerkleinernde Gut angeordnet, welches dreieckig und mit der Spitze nach oben geformt ist (Fig. 7). Dem Leitblech 14 ist eine Verstelleinrichtung 23 zur Einstellung der Kämme in vertikaler Richtung resp. des Abstandes zwischen Walze und Kamm 15 zugeordnet.

Die Versetzung der Achsabstände zwischen der Walze 2 der oberen Ebene 4 zur Walze 3 der unteren Ebene 5 soll dabei mindestens 10mm betragen, um die Verstellbarkeit der Kämme 15 in beiden Ebenen 4, 5 von oben zu gewährleisten.

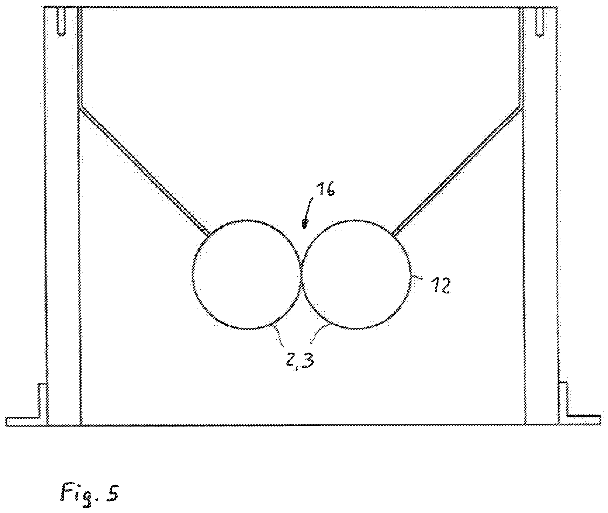

Die Walzen 2, 3 können in einer anderen Ausführungsform anstelle von Einzelwalzenpassagen auch, in mindestens einer der Ebenen 4, 5 paarweise, mit einen Walzenspalt 16 zwischen ihnen angeordnet sein (Fig. 5). Sie laufen relativ zueinander um, Nocken 24 und Nuten 25 beider Walzen 2, 3 sind miteinander verzahnt. Der Abstand der Walzen zueinander resp. der Walzenspalt 16 ist ebenfalls von oben einstellbar, mittels in Fig. 5 nicht explizit dargestellter Verstelleinrichtungen.

Diese Bauform ermöglicht ebenfalls eine sehr kompakte Bauweise und eine höhere Kapazität pro Walze 2, 3, da die Drehzahl im Vergleich zu Einzelwalzenpassagen erhöht werden kann.

Die Einstellung der Walzen 2, 3 und insbesondere der Kämme 15 erfolgt in vertikaler Richtung und unter Handhabung von oben mittels Verstelleinrichtung 23 zumindest in der oberen Ebene 4, bevorzugt jedoch in beiden Ebenen (Fig. 7). Dies ermöglicht eine sehr kompakte Bauweise der erfindungsgemässen Einrichtung mit geringer Grundfläche und somit auch eine sehr dichte Anordnung mehrerer Einrichtungen neben- und/oder hintereinander.

Die Zerkleinerung der Teeblätter erfolgt in einer oxidativen Normalatmosphäre in der erfindungsgemässen Einrichtung.

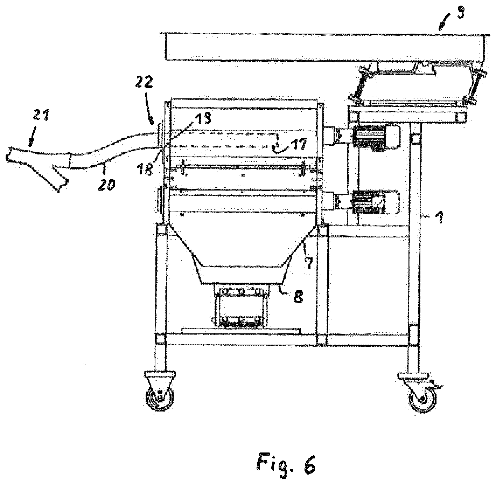

Für einen Dauerbetrieb kann die erfindungsgemässe Einrichtung mit einer Aspiration versehen sein, um die Ablagerung von Teestaub o. a. Partikeln zu verhindern. Hierzu ist bevorzugt je Ebene 4, 5 ein perforiertes Rohr 17 aus rostfreiem Stahl vorgesehen, das mittels einer lebensmittelzugelassenen Flanschdichtung 18 einseitig im Gehäuse 1 angeordnet ist (Fig. 6). Ein Ende des Rohrs 17 ragt aus dem Gehäuse 1 hervor und das andere Ende ist freiliegend und offen im Gehäuse 1. Das Rohr 17 erstreckt sich weitgehend über die Länge der Walzen 2, 3. Über eine Flanschverbindung 19, die mit einer Drossel 22 versehen ist, und einen Schlauch 20 ist das Rohr 17 mit einer vereinfacht dargestellten Absaugeinrichtung 21verbunden. Die Absaugeinrichtung 21 kann wiederum mit einem Abluftfilter gekoppelt sein, bevorzugt einem explosionsfesten Abluftfilter.

Sämtliche Verstell- und Steuerungsvorgänge erfolgen bevorzugt elektronisch, jedoch ist auch eine manuelle Steuerung möglich.

Die erfindungsgemässe Einrichtung, wie auch die Speiseeinrichtung 9 können stationär angeordnet sein, oder wie in den Fig. 1 und 2 dargestellt, auf fahrbaren Gestellen 10, 11 gelagert sein. Hierbei kann das Gestell 10 für die erfindungsgemässe Einrichtung auch das Förderband 8 aufnehmen.

In einer sehr einfachen Weise der Einrichtung kann auch nur eine einzige Walze 2 vorgesehen sein. Hierbei ist die Walze 2 gleichfalls dem Einlass 6 in vertikaler Richtung nachgeordnet ist, korrespondiert jedoch mit zwei Kämmen 15, wie in der Fig. 5 gezeigt.

Eine Einstellung der Kämme 15 ist wiederum in vertikaler Richtung und unter Handhabung von mindestens einem Verstellmechanismus von oben vorgesehen, wobei der Verstellmechanismus in oder oberhalb des Gehäuses 1 resp. der in dieser Ausführungsform einzigen Ebene 4 angeordnet ist.

### Liste der Bezugszeichen

1 Gehäuse
2 Walze
3 Walze
4 obere Ebene
5 untere Ebene
6 Einlass
7 Auslass
8 Förderband
9 Speiseeinrichtung
10 Gestell
11 Gestell
12 Umfangsfläche
13 Leitblech
14 Leitblech
15 Kamm
16 Walzenspalt
17 Rohr
18 Flanschdichtung
19 Flanschverbindung
20 Schlauch
21 Absaugeinrichtung
22 Drossel
24 Nocken
25 Nut
L Breite einer Nut
P Höhe eines Nockens
W Breite eines Nockens

## Patentansprüche

1. Einrichtung zur Zerkleinerung von trockenen Pflanzen, insbesondere zur Zerkleinerung von getrockneten Teeblättern, Kräutern und anderer trockenbarer Pflanzen und deren Bestandteile durch Zerkleinerung mittels drehbar angeordneter Walzen, die mit Nocken (24) oder Schneidkanten besetzt sind, die Einrichtung ein Gehäuse (1) mit einem obenliegenden Einlass (6) für das zu zerkleinernde Gut und einem unten liegenden Auslass (7) für das zerkleinerte Gut sowie mindestens zwei oder mehr drehbare und angetriebene Walzen (2, 3) umfasst, **dadurch gekennzeichnet, dass** die Walzen (2, 3) identisch sind und in mindestens zwei oder mehr Ebenen (4, 5) übereinander, mit mindestens zwei Walzen (2, 3) pro Ebene (4, 5), die mit mindestens einem Kamm (15) korrespondiert, angeordnet sind, wobei die Walzen (2) der oberen Ebene (4) einen grösseren Abstand zueinander aufweisen als die Walzen (3) in der unteren Ebene (5), und wobei eine Versetzung der Achsabstände zwischen der Walze (2) der oberen Ebene (4) zur Walze (3) der unteren Ebene (5) mindestens 10mm betragen soll.

2. Einrichtung nach Anspruch 1, **dadurch gekennzeichnet, dass** links bzw. rechts von jeder Walze (2, 3) zur Seitenwand des Gehäuses (1) hin schräg ansteigende und auf die Walzen (2, 3) gerichtete Leitbleche 13, 14) angeordnet sind, die auf Höhe der Walzen (2, 3) mit mindestens einem strukturierten Kamm (15) versehen sind.

3. Einrichtung nach Anspruch 1 oder 2, **dadurch gekennzeichnet, dass** die Walzen (2, 3) paarweise angeordnet sind, wobei jedes Walzenpaar so angeordnet ist, dass sich die Walzen gegeneinander drehen, in einem Walzenspalt (16) ineinander eingreifend.

4. Einrichtung nach Anspruch 1 oder 2, **dadurch gekennzeichnet, dass** den Walzen Leitbleche (13, 14) als Teil- und Zuführblech für das zu zerkleinernde Gut zugeordnet angeordnet sind, wobei das Leitblech (14) dreieckig mit der Spitze nach oben geformt ist.

5. Einrichtung nach einem der Ansprüche 1 bis 4, **dadurch gekennzeichnet, dass** die Drehzahl der Walzen (2, 3) variierbar ist.

6. Einrichtung nach einem der Ansprüche 1 bis 5, **dadurch gekennzeichnet, dass** mindestens einer oder jeder Walze (2, 3) zwei Kämme (15) zugeordnet sind.

7. Einrichtung nach einem der Ansprüche 1 bis 6, **dadurch gekennzeichnet, dass** eine Einstellung der Kämme (15) resp. des Abstandes zwischen Walze (2, 3) und Kamm (15) in vertikaler Richtung und unter Handhabung von mindestens einem Verstellmechanismus von oben vorgesehen ist, wobei zumindest ein Verstellmechanismus in oder oberhalb der oberen Ebene (4) angeordnet sind.

8. Einrichtung nach einem der Ansprüche 1 bis 7, **dadurch gekennzeichnet, dass** sie mit einer Aspiration versehen ist, wobei mit und ohne Aspiration eine Normalatmosphäre im Gehäuse (1) herrscht.

9. Einrichtung nach einem der Ansprüche 1 bis 8, **dadurch gekennzeichnet, dass** sie stationär oder verfahrbar ausgebildet ist.

10. Einrichtung nach einem der Ansprüche 1 bis 9, **dadurch gekennzeichnet, dass** sie in Einheiten, modular und kompakt nebeneinander und/oder hintereinander anordenbar ist.

11. Einrichtung nach einem der Ansprüche 1 bis 10, **dadurch gekennzeichnet, dass** die Nocken (24) eine Höhe (P) von mindestens 3,5mm und eine Breite (W) von bis zu 6mm aufweisen.

12. Einrichtung nach einem der Ansprüche 1 bis 11, **dadurch gekennzeichnet, dass** der Abstand (L) zwischen zwei Nocken (24), resp. die Weite der Nut (25) auf der Umfangsfläche der Walze kleiner als die Breite (W) der Nocken (24) gewählt ist, resp. (W) < 2(L).

13. Einrichtung nach einem der Ansprüche 1 bis 12, **dadurch gekennzeichnet, dass** die Walze (2) dem Einlass (6) in vertikaler Richtung nachgeordnet ist und mit zwei Kämmen (15) korrespondiert, und wobei zur Einstellung der Kämme (15) in vertikaler Richtung und unter Handhabung von oben ein Verstellmechanismus vorgesehen ist, der im oder oberhalb des Gehäuses (1) angeordnet ist.

## Claims

1. An apparatus for chopping dried plants, in particular for chopping dried tea leaves, herbs and other dryable plants and their constituents by chopping by means of rotatably mounted rolls which are provided with cams (24) or cutting edges, the apparatus comprising a housing (1) with an inlet (6) at the top for the material to be chopped and an outlet (7) at the bottom for the chopped material, and at least two or more rotatable and driven rolls (2, 3), **characterised in that** the rolls (2, 3) are identical and are arranged one above the other in at least two or more levels (4, 5), with at least two rolls (2, 3) per level (4, 5), which corresponds with at least one comb (15), wherein the rolls (2) of the upper level (4) are at a greater distance from one another than the rolls (3) in the lower level (5), and wherein a displacement of the distances between the axes of the roll (2) of the upper level (4), and the roll (3) of the lower level (5) is intended to be at least 10 mm.

2. The apparatus according to Claim 1, **characterised in that** baffles (13, 14) are arranged to the left and right of each roll (2, 3), said baffles rising diagonally towards the side wall of the housing (1), being directed towards the rolls (2, 3) and being provided with at least one structured comb (15) at the height of the rolls (2, 3).

3. The apparatus according to Claim 1 or 2, **characterised in that** the rolls (2, 3) are arranged in pairs, wherein each roll pair is arranged such that the rolls rotate towards one another and mesh in a nip (16).

4. The apparatus according to Claim 1 or 2, **characterised in that** the rolls are assigned baffles (13, 14) as separating and supplying plates for the material to be chopped, wherein the baffle (14) is triangular with the tip at the top.

5. The apparatus according to any one of Claims 1 to 4, **characterised in that** the rotation speed of the rolls (2, 3) is variable.

6. The apparatus according to any one of Claims 1 to 5, **characterised in that** at least one or each roll (2, 3) is assigned two combs (15).

7. The apparatus according to any one of Claims 1 to 6, **characterised in that** a setting of the combs (15) or the distance between rolls (2, 3) and comb (15) is provided in the vertical direction while handling at least one adjustment mechanism from above, wherein at least one adjustment mechanism is arranged in or above the upper level (4).

8. The apparatus according to any one of Claims 1 to 7, **characterised in that** it is provided with an aspiration means, wherein a normal atmosphere prevails in the housing (1) with and without the aspiration means.

9. The apparatus according to any one of Claims 1 to 8, **characterised in that** it is stationary or mobile.

10. The apparatus according to any one of Claims 1 to 9, **characterised in that** it can be arranged in units next to one another and/or behind one another in a modular and compact manner.

11. The apparatus according to any one of Claims 1 to 10, **characterised in that** the cams (24) have a height (P) of at least 3.5 mm and a width (W) of up to 6 mm.

12. The apparatus according to any one of Claims 1 to 11, **characterised in that** the distance (L) between two cams (24) or the width of the groove (25) on the circumferential face of the roll is selected to be smaller than the width (W) of the cams (24), or (W) < 2 (L) .

13. The apparatus according to any one of Claims 1 to 12, **characterised in that** the roll (2) is arranged downstream of the inlet (6) in the vertical direction and corresponds with two combs (15), and wherein, to set the combs (15) in the vertical direction while handling from above, an adjustment mechanism is provided, which is arranged in or above the housing (1) .

## Revendications

1. Équipement, destiné à broyer des végétaux secs, destiné notamment à broyer des feuilles de thé, des herbes séchées et d'autres végétaux séchables et leurs composants par broyage au moyen de rouleaux placés de manière rotative, qui sont pourvus de cames (24) ou d'arêtes coupantes, l'équipement comprenant un carter (1) avec une entrée (6) située sur le dessus, pour le produit à broyer et une sortie (7) située sur le dessous, pour le produit broyé, ainsi qu'au moins deux rouleaux (2, 3) ou plus, rotatifs et entraînés, **caractérisé en ce que** les rouleaux (2, 3) sont identiques et sont superposés dans au moins deux plans (4, 5) ou plus, à raison d'au moins deux rouleaux (2, 3) par plan (4, 5), qui correspond avec au moins un peigne (15), les rouleaux (2) du plan (4) supérieur présentant entre eux un écart supérieur à celui des rouleaux (3) dans le plan (5) inférieur, et un décalage des entraxes entre le rouleau (2) du plan (4) supérieur par rapport au rouleau (3) du plan (5) inférieur, étant censé être d'au moins 10 mm.

2. Équipement selon la revendication 1, **caractérisé en ce qu'**à gauche ou à droite de chaque rouleau (2, 3) sont placés des déflecteurs (13, 14) croissant en direction de la paroi latérale du carter (1) et orientés vers les rouleaux (2, 3), qui à la hauteur des rouleaux (2, 3) sont munis d'au moins un peigne (15) structuré.

3. Équipement selon la revendication 1 ou 2, **caractérisé en ce que** les rouleaux (2, 3) sont placés par paires, chaque paire de rouleaux étant placée de telle sorte que les rouleaux tournent l'un vers l'autre, en s'engageant l'un dans l'autre dans un intervalle (16) entre les rouleaux.

4. Équipement selon la revendication 1 ou 2, **caractérisé en ce qu'**entre les rouleaux sont placés des déflecteurs (13, 14), associés en tant que tôle de séparation et de guidage, pour le produit à broyer, la déflecteur (14) étant configuré en triangle, avec la pointe dirigée vers le haut.

5. Équipement selon l'une quelconque des revendications 1 à 4, **caractérisé en ce que** la vitesse de rotation des rouleaux (2, 3) est variable.

6. Équipement selon l'une quelconque des revendications 1 à 5, **caractérisé en ce qu'**à au moins un ou à chaque rouleau (2, 3) sont associés deux peignes (15).

7. Équipement selon l'une quelconque des revendications 1 à 6, **caractérisé en ce qu'**il est prévu un réglage des peignes (15), respectivement de l'écart entre le rouleau (2, 3) et le peigne (15) en direction verticale et par manipulation d'au moins un mécanisme d'ajustage par le dessus, au moins un mécanisme d'ajustage étant placé dans ou au-dessus du plan (4) supérieur.

8. Équipement selon l'une quelconque des revendications 1 à 7, **caractérisé en ce qu'**il est muni d'une aspiration, une atmosphère normale régnant dans le carter (1), avec ou sans aspiration.

9. Équipement selon l'une quelconque des revendications 1 à 8, **caractérisé en ce qu'**il est conçu en version stationnaire ou déplaçable.

10. Équipement selon l'une quelconque des revendications 1 à 9, **caractérisé en ce qu'**il est susceptible d'être placé en unités, sous forme modulaire et compacte, côte à côte ou l'un derrière l'autre.

11. Équipement selon l'une quelconque des revendications 1 à 10, **caractérisé en ce que** les cames (24) présentent une hauteur (P) d'au moins 3,5 mm et une largeur (W) de jusqu'à 6 mm.

12. Équipement selon l'une quelconque des revendications 1 à 11, **caractérisé en ce que** l'écart (L) entre deux cames (24), respectivement l'ampleur de la rainure (25) sur la surface circonférentielle du rouleau est sélectionnée en étant inférieur(e) à la largeur (W) des cames (24), respectivement (W) < 2(L).

13. Équipement selon l'une quelconque des revendications 1 à 12, **caractérisé en ce que** le rouleau (2) est placé en aval de l'entrée (6) en direction verticale et correspond à deux peignes (15) et un mécanisme d'ajustage qui est placé dans ou au-dessus du carter (1) étant prévu pour régler les peignes (15) dans la direction verticale et en manipulant par le dessus.
